# EUROPEAN PATENT APPLICATION

(11) **EP 0 886 152 A1**
(43) Date of publication of application: **23.12.1998**
(21) Application number: 98303743.3
(22) Date of filing: 13.05.1998
(51) Int. Cl.: G02B 6/16, G02B 5/18

(54) **Delocalisation of stitch errors in the writing of gratings**

(30) Priority: 17.06.1997 US 877784
(71) Applicant: NORTHERN TELECOM LIMITED, Montreal, Quebec H2Y 3Y4 (CA)
(72) Inventor: Clements, Stephen John, Stansted, Essex, CM24 8LQ (GB)
(74) Representative: Laurence, Simon French

(57) **Abstract**

Reducing the step size in a step and repeat process used to E-beam write field by field (11) a grating in a layer of resist (10) so that adjacent fields overlap, whereby two or more fields are employed to write each grating element, delocalises the stepping stitch errors, and thereby reduces their deleterious effect. The resulting increased writing complexity introduces other problems, and hence there is a limit beyond which further increasing the number of fields is no longer beneficial. By suitable grating of the irradiation dose in each field it has been found possible to increase further the delocalisation without further increasing the number of fields employed.

## Description

### BACKGROUND OF THE INVENTION

The present invention relates to the reduction of deleterious effects of stitching errors when using irradiation to write gratings. Such gratings can for instance be written by electro-magnetic irradiation or by electron beam (E-beam), or ion beam, irradiation. Stitching errors are liable to occur when the required length of grating is longer than can conveniently be made in a single-stage writing process and so recourse has had to be had to some for of 'step and repeat' writing processing. Such a situation occurs for instance when employing E-beam technology to write a grating in a lithographic resist layer for the creation of a phase grating for subsequent use in the formation of a Bragg reflective grating in optical waveguide. For such an application the elements of the grating are lines arranged in parallel with a pitch of typically about 1µm. Typically the length of the phase grating, measured perpendicular to the direction in which the grating lines extend, is required to be about 50mm. On the other hand a typical E-beam writing machine can steer an E-beam conveniently over an area measuring not much more than 4mm by 4mm. Thus the writing of such a 50mm long grating is liable to require stepping the lithographic mask material relative to the E-beam machine ten or more times over. Designating as a 'field' the area over which the E-beam is written without any relative movement between mask material and E-beam machine, the stepping movement should ideally be such that the pitch of the grating elements does not change in a discontinuous manner in the transition between grating elements written with one field and those written with an adjoining field. Designating this smooth progression condition as exact abutment of adjacent frames, what is ideally required is the absence of stitching errors characterised as unintentional overlap of adjacent fields intended to be in exact abutment, or as unintentional gaps between them. When such stitch errors occur, they typically have a significant systematic error content so that, if the second field is displaced from its intended position relative the first field by an amount Δd, the third field is liable to be displaced from its intended position relative the first field by 2Δd, and so on. These displacements provide the grating structure with an unwanted spatial frequency component with a grating period of one field length that for some applications is liable to provide significant degradation of the performance of the structure.

A paper by Jun Ye et al entitled, 'Spatial frequency filtering using multiple-pass printing', J.Vac.Sci. Technol. B12(6) Nov/Dec 1994 pp3455-9 describes a method by which this problem can be ameliorated. The essence of the approach described in this paper is to use multiple passes with linearly shifted fields. By arranging for these shifted fields to have a magnitude such that m fields contribute to the writing of a single grating element, it is possible to reduce the magnitude of each stitch error by a factor m. This is accompanied by an m-fold increase in the number of stitch errors, but in many applications the effect of the reduced stitch error scales less than proportionately, for example at Δd⁻², with the result that the multiple-pass printing affords a beneficial effect.

Upon a superficial view it is possible to envisage that increasing the value of the factor m will provide further benefit; but in practice there are also disadvantageous factors to be considered. Amongst these is that increasing the value of the factor m adds to the number of times the step and repeat operation has to be performed, and this adds to the time taken to complete the writing of any given grating, and also adds to the complexity in deriving the pattern data for each of the overlapping operations.

### SUMMARY OF THE INVENTION

An object of the present invention to increase the benefits afforded by a given value of the factor m.

According to a first aspect, the invention provides a method of writing by irradiation a grating composed of grating elements, which method includes the steps of writing the elements in a layer of irradiation responsive material field by field relatively disposed so as to provide at least one overlap region in which at least two fields overlap;
in which overlap region groups of one or more grating elements are written by each of at least two fields with doses of graduated magnitude; and
wherein the graduated irradiation doses are selected such that, when all the fields have been written, each grating element within the overlap region has received substantially the same aggregate irradiation dose.

According to the second aspect, the invention provides a method of writing a grating composed of a set of grating elements, which grating elements are written partially or completely in fields by selective irradiation in a layer of irradiation responsive material,
wherein the writing of each field comprises writing the members of an associated group of grating elements constituted by selected members of the set of grating elements, each member of the associated group of grating elements being written with an associated specific irradiation dose,
wherein the fields overlap in a manner defining overlap areas, each overlap area being constituted by an associated subset of grating elements that are common to each of at least two different fields,
wherein at least one overlap area, in respect of at least one field, at least one grating element or sub-subset of grating elements within the subset is written with a specific value of irradiation dose that is significantly different from that with which at least one other grating element or sub-subset of grating elements is written,
and wherein in said at least one overlap area, in respect of each grating element of the associated subset of grating elements, the aggregate of the written doses of each of the fields whose groups of grating elements include the subset of grating elements sums to substantially the same aggregate dose.

In the case of the writing of chirped gratings the method of the present invention can also have the beneficial effect of smoothing out the gradation of chirp.

### BRIEF DESCRIPTION OF THE DRAWINGS

There follows a description of the manufacture of gratings embodying the invention in preferred forms. The description refers to the accompanying drawings in which:-
- Figure 1: is a schematic representation of the writing of a number of fields of grating elements in a layer of irradiation responsive material,
- Figure 2: is a similar representation, illustrating the positioning of a further set of fields in relation to that of the fields of Figure 1,
- Figure 3,: in a schematic representation showing the overlap of irradiation doses of selected grating elements of selected fields of Figure 2, and
- Figures 4A, 4B and 5: are representations of irradiation dose gradings of fields respectively when two, when two, and when three, fields contribute to the writing of a grating element.

### DESCRIPTION OF THE PREFERRED EMBODIMENTS

For facilitating an understanding of the underlying principles of operation of the manufacture of gratings according to the present invention, the ensuing description of such manufacture is accompanied by additional description of the manufacture of prior art gratings and their underlying principles of operation.

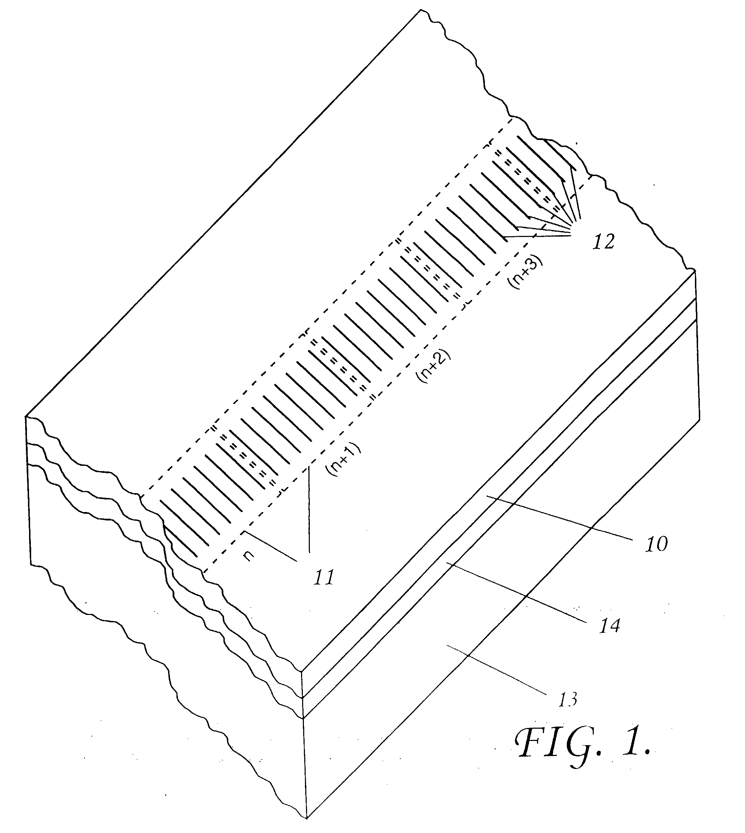

Figure 1 depicts a layer 10 of E-beam resist in which a series of fields 11 of parallel grating lines 12 have been written by E-beam irradiation. The layer 10 of E-beam resist in which the grating is formed is typically a layer deposited directly or indirectly upon the surface of a substrate 13 that it is desired to pattern using the resist layer as a mask for generating in that substrate surface a pattern conforming to the pattern of the grating written into the resist layer. For this purpose, once the writing of the grating has been completed the resist layer 10 is processed to develop in it a pattern of windows conforming to the pattern of irradiation it has received by that writing. Optionally an interlayer 14 may be included between the layer 10 and the substrate 13. Such an interlayer might be omitted in the case of a resist layer mask employed for patterning a semiconductor substrate, but would normally be included, for instance in the form of an interlayer of chromium, when employing the resist layer mask for patterning a silica substrate in order to create an optical phase grating. The resist layer is used as a mask for patterning the interlayer, and then the interlayer is used as a mask for patterning the substrate.

Each field 11 comprises a group of grating lines 12 written without stepping the layer relative to the E-beam writing machine (not shown) with which the grating lines are written. (For convenience of illustration only eight lines per field have been specifically indicated in Figure 1, but in practice there would be many more than this). Each field 11 is of length d and, if adjoining fields 11 in Figure 1 were exactly abutted, then there would be no discontinuity between the periodicity of the grating lines 12 across the boundaries between adjacent fields. For illustrative convenience, the grating lines within each field have been shown as being of the same pitch, but the method is applicable also to the manufacture of chirped gratings in which the pitch is a smoothly varying function of position within each field, and also from field to field. Figure 1 specifically depicts the situation in which there is not exact abutment, but instead in which there is a stitch error (in this instance a gap stitch error rather than an overlap one) of Δd between adjacent fields. Accordingly the lines 12 of the (n+1)^{th} field 11 are displaced by n·Δd from their intended positions relative the first field, while those of the (n+2)^{th} field 11 are displaced by (n+1)·Δd.

If the fields 11 depicted in Figure 1 were the only fields to be written, and if the lines 12 of these fields were written with a high enough E-beam dose to generate a developable image, (i.e. the dose were sufficient for the irradiated layer to be developable to form a pattern of windows conforming to the pattern of irradiation received by the layer 10), then a grating would have been created with stitch errors having a periodicity d and an amplitude Δd.

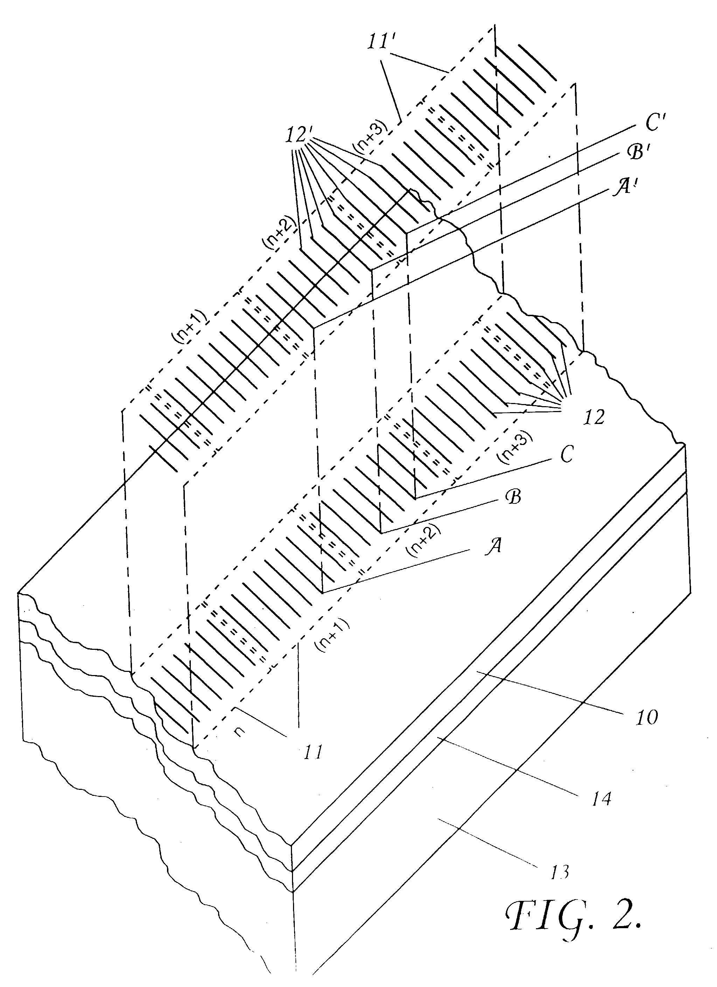

Figure 2 depicts the same substrate 10, and the same fields 11 of grating lines 12, but with an additional set of fields 11' of grating lines 12'. These fields 11' are identical with their counterpart fields 11 but each field 11' is displaced by approximately d/2 in the axial direction of the grating with respect to its counterpart field 11.

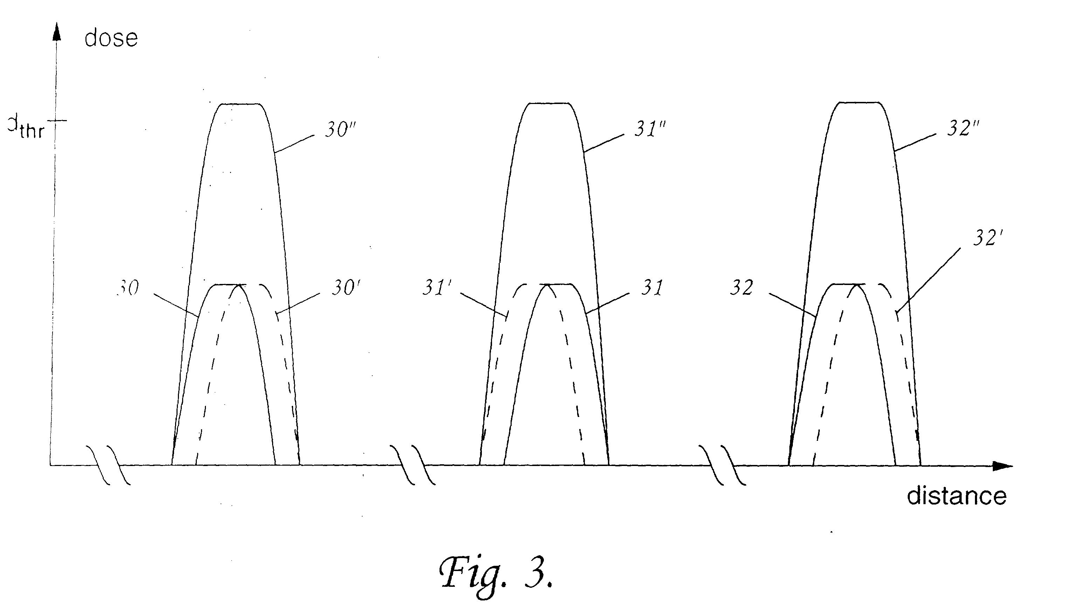

If the fields 11 and 11' were the only fields to be written, and if the lines 12 and 12' of these fields were individually written with doses half the value sufficient to generate a developable image, then the grating would have been created in accordance with the teachings of the above referenced paper by Jun Ye et al with particular reference to the paper's Figure 2a. Whereas, as has been previously explained, in the case of fields 11, the lines 12 of the (n+1)^{th} field 11 are displaced by n·Δd from their intended positions measured relative to the positions of the lines 12 of the first field 11; in the case of the fields 11', the lines 12' of the (n+1)^{th} field 11' are displaced by only (n-1/2)·Δd from their intended positions measured relative to the positions of the lines 12 of the field 11. Consequently, the resulting grating has stitch errors of Δd/2 at intervals of d/2 instead of stitch errors of Δd at intervals of d. This may be more readily understood by reference to Figure 3. In Figure 3 trace 30 schematically depicts the E-beam dose profile of one of the lines 12 of the (n+1)^{th} field 11, for instance line A, that is partially overlapped by one of the lines 12' of the (n+2)^{th} field 11'. Trace 30' similarly schematically depicts the E-beam dose profile of the partially overlapping line 12', line A' of the (n+2)^{th} field 11'. Trace 30" schematically depicts the aggregates dose profile of traces 30 and 30'. Remembering that profile 30 is centred n·Δd ahead of its intended position (measured relative to the lines 12 of the first field 11), and that profile 30' is centred (n+1-1/2)·Δd ahead of its intended position, it will be evident that the region of the aggregate profile 30" that exceeds the developability dose threshold dₜₕᵣ is centred (n+1/4)·Δd ahead of its intended position.

Trace 31 similarly schematically depicts the E-beam dose profile of one of the lines 12 of the (n+2)^{th} field 11 for instance line 3 that is partially overlapped by one of the lines 12' of the (n+2)^{th} field 11'. Trace 31' depicts the dose profile of the partially overlapping line 12', line B', of the (n+2)^{th} field 11', and trace 31" depicts the dose profile that is the aggregate of dose profiles 31 and 31'. Remembering that profile 31 is centred (n+1)·Δd ahead of its intended position, and that profile 31' is centred (n+1-1/2)·Δd, it is clear that profile 31" exceed the developability threshold in a region centred (n+3/4)·Δd ahead of its intended position. Thus the stitch error occurring at the boundary between the (n+1)^{th} field 11 and the (n+2)^{th} is seen to be Δd/2.

Traces 32, 32' and 32" correspond respectively to traces 30, 30' and 30", but in respect of one of the lines 12 of the (n+2)^{th} field 11, for instance line C, and the line 12' of the (n+3)^{th} field 11', line C, that is partially overlapped by it. Traces 32, 32' and 32" are therefore respectively centred (n+1)·Δd, (n+2-1/2)·Δd and (n+1+1/4)·Δd ahead of their respective intended positions. Thus the stitch error occurring at the boundary between the (n+1)^{th} field 11' and the (n+2)^{th} is also seen to be Δd/2.

From the foregoing it is clear that, by adding further sets of overlapping fields, and making corresponding reductions in the doses of individual fields, the magnitude of the resulting stitch errors can be further reduced in proportion to the number of sets of overlapping fields employed. The above-referenced paper by Jun Ye et al specifically exemplifies, with reference to the paper's Figure 2b, the instance of using four sets of overlapping fields, each set with a d/4 offset with respect to its predecessor, in order to provide stitch errors of only Δd/4. However a major drawback of this approach to extending stitch error magnitude reduction is that it is obtained at the expense of multiplying the number of fields that have to be employed in the writing process.

The alternative way of obtaining an analogous extension of stitch error reduction that is the subject of the present invention - a way that does not involve multiplying up the number of frames in direct proportion to that magnitude of stitch error reduction - involves making the value of the E-beam dose a function of position across at least some of the fields.

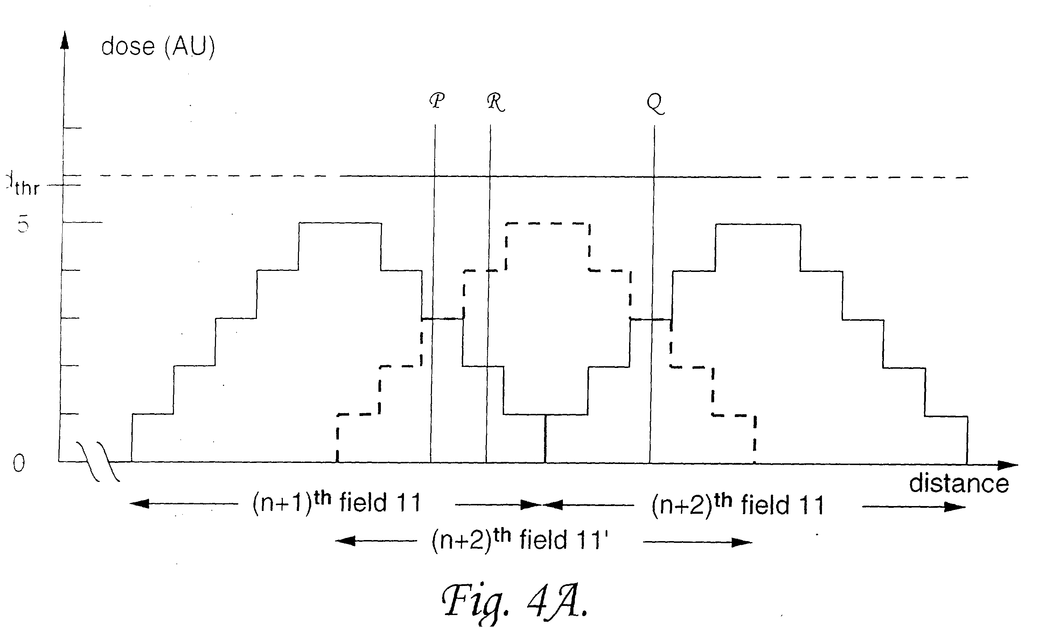

In the case of a grating written with just two sets of overlapping fields as depicted in Figure 2 the dose may be ramped or stepped up in amplitude for the first half of a frame and be similarly ramped or stepped down again in the second half. Figure 4A depicts the situation in which, in respect of each of the n^{th} and (n+1)^{th} fields 11 and the (n+1)^{th} field 11', the dose is incremented in steps of one arbitrary unit (AU) from 1AU through to 5AU and then back to 1AU again. The 5AU steps are twice the length of the other steps. Therefore, over the whole length compassed by the (n+1)^{th} field 11, the aggregate dose received by each individual line is 6AU, which is arranged to be just in excess of the developability threshold dose dₜₕᵣ.

Under these conditions a line at some position P that is written by the aggregate dose of 3AU from the (n+1)^{th} field 11 with 3AU from the (n+2)^{th} field 11', is written under the same conditions as those giving rise to the trace 30" of Figure 3. Similarly, a line at some position Q that is written by the aggregate dose of 3AU from the (n+2)^{th} field 11 with 3AU for the (n+2)^{th} field 11' is written under the same condition as those giving rise to trace 31" of Figure 3. In this instance, however, instead of but a single stitch error between lines P and Q, there are five stitch errors, one present at each of the four points where the field dose levels change, and the fifth where the (n+1)^{th} field 11 only approximately abuts the (n+2)^{th} field 11. Thus, whereas for a line at position P the positional error is mid-way between that pertaining to the (n+1)^{th} field 11X, for a line at position R written by the aggregate dose of 2AU from the (n+1)^{th} field 11 with 4AU from the (n+2)^{th} field 11'Y than toward that pertaining to the (n+1)^{th} field 11 because of the higher dose provided by the (n+2)^{th} field 11'.

Although Figure 4A specifically depicts the grading of only three of the fields contributing to the writing of the whole grating, in fact all fields are graded for the writing of the preferred embodiment. This grading is the same for all fields except for the end two fields. The distal halves of these two end fields are not overlapped by any other fields, and so these halves have a zero dose level. Their proximal halves have the same grading as the corresponding halves of any of the intermediate fields.

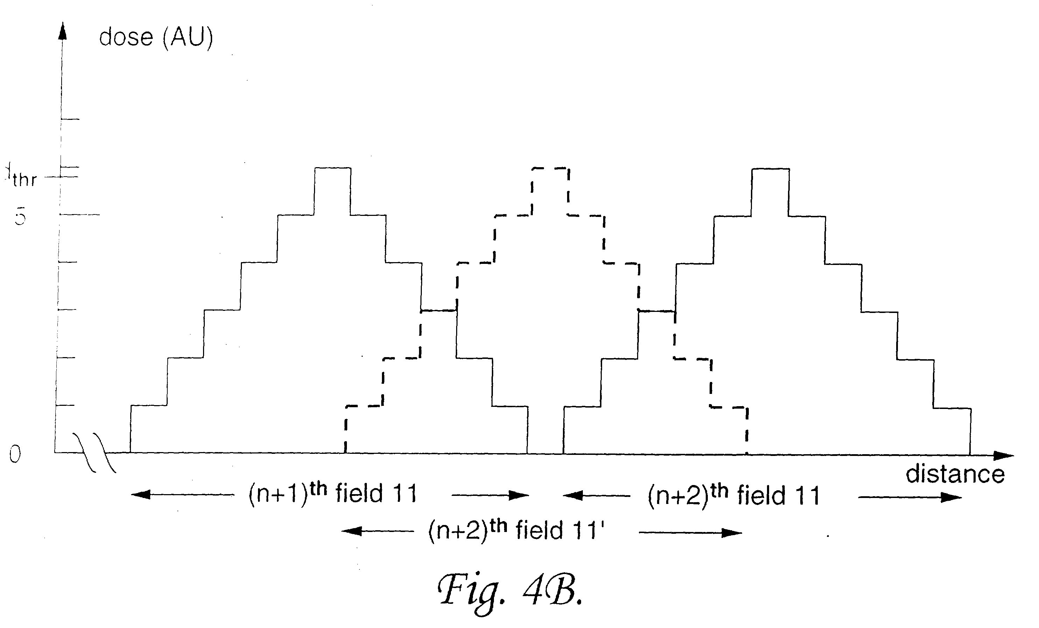

An alternative way of achieving the 6AU dose with just two sets of overlapping fields whose dose is stepped up and down again in steps of 1AU is depicted in Figure 4B. In this instance all the steps are of equal width, and adjacent fields in the same layer, instead of being approximately directly abutted, are spaced by approximately one step width.

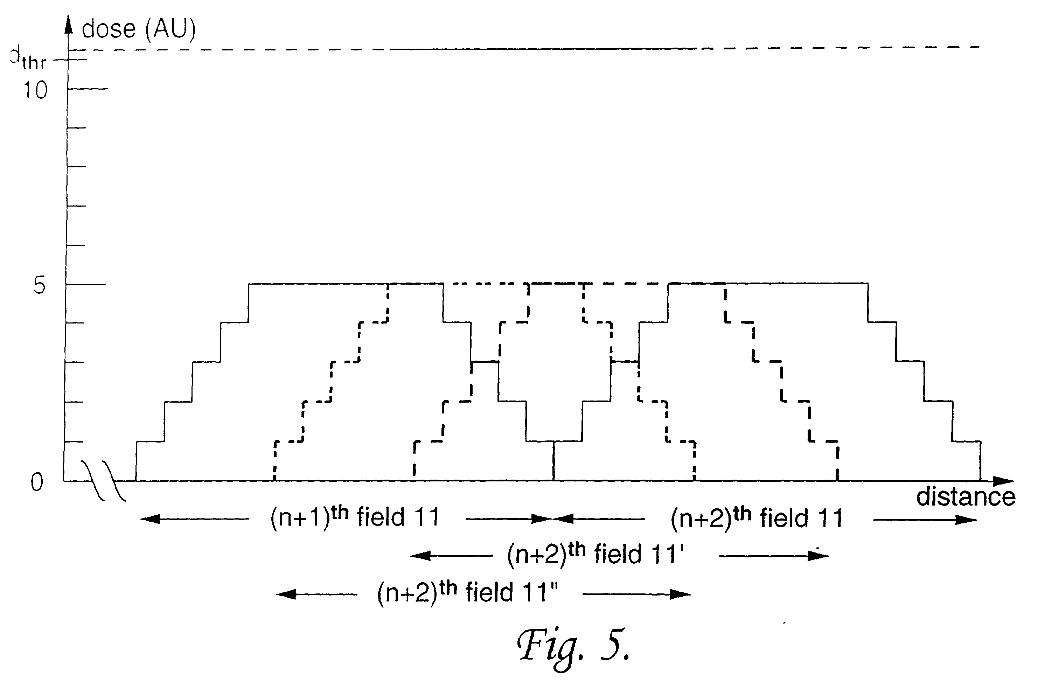

It is to be clearly understood that the invention is not solely applicable to examples in which just two fields contribute to the writing of any grating line. In some circumstance there may for instance be some limitation upon the number of different dose levels that can conveniently be accommodated in a single field. This would limit the number of stitch errors that could be attained by the present invention within the length of a single field if no more than two fields could contribute to the writing of any given line of the grating. Figure 5 illustrates by way of example an arrangement using three fields to write any given line. This arrangement uses a first set of fields 11, a second set of fields 11' displaced approximately one third of a frame length with respect to the first set, and a third set of fields 11" displaced approximately two thirds of a frame length. Figure 5 actually depicts the (n+1)^{th} and (n+2)^{th} frames 11, the (n+2)^{th} frame 11' and the (n+2)^{th} frame 11". In each of these frames the dose is incremented in steps of 1AU from 1AU through to 5AU and then back down to 1AU again. The 5AU step is seven times as long as all the other steps. Each line that is written by the aggregate dose of three of the fields 11, 11' and 11" is written with an aggregate dose of 11AU, and so magnitude of an AU is in this instance such that 11AU just exceeds the developability threshold dₜₕᵣ.

A set of chirped gratings, written with just two sets of overlapping fields using a stepped dose arrrangement substantially as described with particular reference to Figure 4B, but with 16 steps in stead of the 6 specifically illustrated, was used to write a dispersion compensator in a length of optical fibre. The measured ripple in the dispersion characteristic was found to be reduced by a factor of approximately three in comparison with that of a similar dispersion compensator written with a set of gratings written without overlapping fields.

## Claims

1. A method of writing by irradiation a grating composed of grating elements (12), which method includes the steps of writing the elements in a layer of irradiation responsive material (10) field by field (11) relatively disposed so as to provide at least one overlap region in which at least two fields overlap;
characterised in that in the overlap region groups of one or more grating elements are written by each of at least two fields with doses of graduated magnitude; and
wherein the graduated irradiation doses are selected such that, when all the fields have been written, each grating element within the overlap region has received substantially the same aggregate irradiation dose.

2. A method of patterning a surface of a substrate, which method includes the steps of;
providing a coating on said substrate which coating includes a layer of irradiation response material,
writing a grating in the layer of irradiation responsive material by the method claimed in claim 1,
processing the irradiated layer to develop a pattern of windows conforming to the pattern of irradiation received by the layer by said writing of the grating, and
using the developed layer as a mask for spatially selective processing of the substrate.

3. A method as claimed in claim 1 or 2, wherein the irradiation is E-beam irradiation.

4. A method of writing a chirped grating composed of a set of grating elements (12), which grating elements are written partially or completely in fields (11) by selective irradiation in a layer (10) of irradiation responsive material,
characterised in that the writing of each field comprises writing the members of an associated group of grating elements constituted by selected members of the set of grating elements, each member of the associated group of grating elements being written with an associated specific irradiation dose,
characterised in that the fields overlap in a manner defining overlap areas, each overlap area being constituted by an associated subset of grating elements that are common to each of at least two different fields,
wherein at least one overlap area, in respect of at least one field, at least one grating element or sub-subset of grating elements within the subset is written with a specific value of irradiation dose that is significantly different from that with which at least one other grating element or sub-subset of grating elements is written,
and wherein in said at least one overlap area, in respect of each grating element of the associated subset of grating elements, the aggregate of the written doses of each of the fields whose groups of grating elements include the subset of grating elements sums to substantially the same aggregate dose.

5. A method of patterning a surface of a substrate, which method includes the steps of;
providing a coating on said substrate which coating includes a layer of irradiation response material,
writing a grating in the layer of irradiation responsive material by the method claimed in claim 5,
processing the irradiated layer to develop a pattern of windows conforming to the pattern of irradiation received by the layer by said writing of the grating, and
using the developed layer as a mask for spatially selective processing of the substrate.

6. A method as claimed in claim 4 or 5, wherein the irradiation is E-beam irradiation.
